# EUROPEAN PATENT APPLICATION

(11) **EP 4 699 992 A1**
(43) Date of publication of application: **25.02.2026**
(21) Application number: 24822412.3
(22) Date of filing: 25.04.2024
(51) Int. Cl.: C03C 10/02

(54) **MICROCRYSTALLINE GLASS MATERIAL FOR FUEL CELL CONNECTING COMPONENT**

(30) Priority: 16.06.2023 CN 202310720446
(71) Applicant: Chaozhou Three-Circle (Group) Co., Ltd., Chaozhou, Guangdong 515646 (CN); SHENZHEN THREE-CIRCLE TECHNOLOGY CO., LTD., Guangdong 518000 (CN)
(72) Inventor: CHEN, Shuoshuo, Chaozhou, Guangdong 515646 (CN); QIU, Jihua, Chaozhou, Guangdong 515646 (CN)
(74) Representative: Hannke, Christian
(86) International application number: PCT/CN2024/089706
(87) International publication number: WO 2024/255457

(57) **Abstract**

The present application provides a glass-ceramic material for a connection part of a fuel cell, and belongs to the field of fuel cells. The glass-ceramic material includes a crystalline phase and a glass phase. A mass percentage of the crystalline phase in the glass-ceramic material is higher than or equal to 30%. A main crystalline phase of the crystalline phase includes at least one selected from the group consisting of akermanite, feldspar, olivine, clinokurchatovite, silicon dioxide, cerium dioxide, lanthanum aluminum borate, and lanthanum calcium borate. In the present application, a composition and a mass proportion of the main crystalline phase in the glass-ceramic material and a mass percentage of the crystalline phase in the glass-ceramic material are adjusted to prepare a connection part with high-temperature sealing and insulation properties. Even after operating under high-temperature working conditions for a long time, the connection part does not encounter performance degradation or point leakage. The connection part made of the glass-ceramic material in the present application provides a technical support for the commercial application of fuel cell systems.

## Description

### TECHNICAL FIELD

The present application belongs to the field of fuel cells, and specifically relates to a glass-ceramic material for a connection part of a fuel cell.

### BACKGROUND

A fuel cell is a chemical device that directly converts the chemical energy possessed by a fuel into electrical energy. Fuel cells use fuel and oxygen as raw materials, and involve no mechanical transmission components. Thus, fuel cells do not cause noise pollution, and emit minimal harmful gases, resulting in little environmental pollution.

A fuel cell power generation system typically includes two or more stacks, and connecting pipes are required to connect these stacks and achieve gas transport among these stacks. Consequently, the connecting pipes among these stacks must possess excellent sealing performance and insulation properties to prevent short circuits between positive and negative electrodes during a working process. Additionally, to meet the requirements of some types of fuel cells designed for high-temperature operation, the connecting pipes must maintain joint integrity without developing micro-cracks or gas leakage under prolonged high-temperature (600°C to 800°C) service conditions.

Given the performance requirements for connecting pipes among the fuel cell stacks mentioned above, developing sealing and insulating connection parts with excellent mechanical properties at high temperatures has become a key research focus in the field of fuel cells.

### SUMMARY

An objective of the present application is to overcome the shortcomings of the prior art and provide a glass-ceramic material for a connection part of a fuel cell. A connection part made of this glass-ceramic material possesses sealing and insulation properties, exhibits excellent high-temperature mechanical properties, and does not encounter issues such as performance degradation and point leakage even under prolonged high-temperature working conditions.

To achieve the above objective, the present application adopts the following technical solutions:
In a first aspect, a glass-ceramic material for a connection part of a fuel cell is provided, where the glass-ceramic material includes a crystalline phase and a glass phase; a mass percentage of the crystalline phase in the glass-ceramic material is higher than or equal to 30%; and a main crystalline phase of the crystalline phase includes at least one selected from the group consisting of akermanite, feldspar, olivine, clinokurchatovite, silicon dioxide, cerium dioxide, lanthanum aluminum borate, and lanthanum calcium borate.

Glass-ceramic materials are widely recognized as sealing materials for metal-to-metal, metal-to-ceramic, and ceramic-to-ceramic joints; as well as high-performance coating materials for metals and ceramics. Compared with glass, glass-ceramics offer elevated service temperatures, superior mechanical properties, enhanced corrosion resistance, and a very wide range of coefficients of thermal expansion (CTEs). A connection part made of the glass-ceramic material in the present application possesses sealing and insulation properties, exhibits excellent high-temperature mechanical properties, and does not encounter issues such as performance degradation and point leakage even when operating under prolonged high-temperature working conditions.

The inventors have found that, in the present application, the main crystalline phase system is primarily a magnesium-containing glass system with a magnesium-containing phase as a primary precipitated phase. The magnesium-containing phase exhibits high stability and low reactivity with substances volatilized from stainless steel. As a result, the connection part produced in the present application demonstrates outstanding performance when in use.

Through a large number of experiments, the inventors have discovered that, only when the mass percentage of the crystalline phases in the glass-ceramic material is higher than or equal to 30%, a connection part fabricated of the glass-ceramic material can effectively prevent issues such as gas leakage and micro-crack formation at a joint. If the mass percentage of the crystalline phases in the glass-ceramic material is lower than 30%, there will be excessive glass phases in the glass-ceramic material, resulting in a reduced densification degree of the glass-ceramic material. Accordingly, when a fuel cell operates, readily diffusable cations in a metal part can penetrate into the glass-ceramic material, which tends to cause degradation of a joint region between alloy and glass phases and ultimately leads to micro-cracks and gas leakage in the joint region of the connection part. Moreover, the too-low crystalline phase content compromises the stability of the system, such that the connection part undergoes changes under prolonged high-temperature service, resulting in structural failure.

As a preferred embodiment of the glass-ceramic material for a connection part of a fuel cell in the present application, the mass percentage of the crystalline phase in the glass-ceramic material is higher than or equal to 60%. The inventors have found through extensive experiments that, when the mass percentage of the crystalline phase in the glass-ceramic material is higher than or equal to 60%, a connection part fabricated exhibits improved performance, and can withstand an increased tensile and shear strength at 800°C.

As a preferred embodiment of the glass-ceramic material for a connection part of a fuel cell in the present application, the mass percentage of the crystalline phase in the glass-ceramic material is higher than or equal to 85%. Through substantial experiments, the inventors have found that, when the mass percentage of the crystalline phases in the glass-ceramic material is higher than or equal to 85%, there are limited residual glass phases in the glass-ceramic material, and the limited residual glass phases are confined within structures of the crystalline phases. Thus, the entire glass-ceramic structure has low porosity, and does not include continuous channels formed through a material matrix, which minimizes the ion migration through the glass phases at high temperatures and accordingly suppresses any continuous reaction between alloy and glass-ceramic portions in a connection part fabricated. Further, as thermodynamically stable phases, the crystalline phases remain stable even under prolonged high-temperature service, and are at low risk of softening, dimensional changes, or phase transformations. This ensures the optimal stability of a sealing structure of a connection part, prevents ion penetration at an alloy-glass joint region, and protects a joint region from any performance degradation during prolonged service.

As a preferred embodiment of the glass-ceramic material for a connection part of a fuel cell in the present application, the main crystalline phase of the crystalline phase includes akermanite and silicon dioxide.

It is be noted that a main component of the akermanite in the present application is 2CaO·MgO·2SiO₂.

As a more preferred embodiment of the glass-ceramic material for a connection part of a fuel cell in the present application, based on a total mass of the glass-ceramic material, the glass-ceramic material includes 5% to 60% by mass of akermanite and 3% to 10% by mass of silicon dioxide, and a mass ratio of the akermanite to the silicon dioxide is (0.3-8):1. Through extensive experimentation, the inventors have found that, when the mass percentages and mass ratio of the akermanite and the silicon dioxide fall within the above respective ranges, a connection part of a fuel cell fabricated accordingly can withstand at least a tensile force of 40 N or more and a shear force of 15 N or more under 800°C high-temperature working conditions, and does not encounter leakage during service.

As a preferred embodiment of the glass-ceramic material for a connection part of a fuel cell in the present application, the main crystalline phase of the crystalline phase includes feldspar and silicon dioxide.

As a more preferred embodiment of the glass-ceramic material for a connection part of a fuel cell in the present application, the feldspar is at least one selected from the group consisting of anorthite, barium feldspar (also referred to as "celsian"), and strontium feldspar (also referred to as "strontian feldspar").

As a more preferred embodiment of the glass-ceramic material for a connection part of a fuel cell in the present application, based on a total mass of the glass-ceramic material, the glass-ceramic material includes 20% to 65% by mass of feldspar and 10% to 30% by mass of silicon dioxide, and a mass ratio of the feldspar to the silicon dioxide is (0.3-5):1. In the present application, the feldspar serves as a key factor determining the CTE of the glass-ceramic material, and the content of the silicon dioxide cannot be too high due to relatively low CTE of the silicon dioxide. Thus, the mass ratio of the feldspar to the silicon dioxide needs to be strictly controlled. Through extensive experimentation, the inventors have found that, when the mass percentages and mass ratio of the feldspar and the silicon dioxide fall within the above respective ranges, a connection part of a fuel cell fabricated accordingly can withstand at least a tensile force of 40 N or more and a shear force of 15 N or more under 800°C high-temperature working conditions, and does not encounter leakage during service.

As a preferred embodiment of the glass-ceramic material for a connection part of a fuel cell in the present application, the main crystalline phase of the crystalline phase includes akermanite and olivine.

As a preferred embodiment of the glass-ceramic material for a connection part of a fuel cell in the present application, the olivine is at least one selected from the group consisting of forsterite and monticellite.

As a more preferred embodiment of the glass-ceramic material for a connection part of a fuel cell in the present application, based on a total mass of the glass-ceramic material, the glass-ceramic material includes 0% to 50% by mass of akermanite and 5% to 50% by mass of olivine, and a mass ratio of the akermanite to the olivine is (0-15):1. Through extensive experimentation, the inventors have found that, when the mass percentages and mass ratio of the akermanite and the olivine fall within the above respective ranges, a connection part of a fuel cell fabricated accordingly can withstand at least a tensile force of 40 N or more and a shear force of 15 N or more under 800°C high-temperature working conditions, and does not encounter leakage during service.

In a second aspect, the present application provides a connection part for a fuel cell, including a glass-ceramic portion made of the glass-ceramic material described in the first aspect.

As a preferred embodiment of the connection part for a fuel cell in the present application, the connection part further includes an alloy portion.

As a preferred embodiment of the connection part for a fuel cell in the present application, the glass-ceramic portion and the alloy portion in the connection part are hermetically joined end-to-end.

As a more preferred embodiment of the connection part for a fuel cell in the present application, the alloy portion is made of an alloy material.

As a more preferred embodiment of the connection part for a fuel cell in the present application, the glass-ceramic portion and the alloy portion each have a tubular shape.

As a more preferred embodiment of the connection part for a fuel cell in the present application, two ends of the glass-ceramic portion are each provided with a groove or a boss.

As the most preferred embodiment of the connection part for a fuel cell in the present application, the alloy portion is a flanged tubular alloy portion with an inward or outward flange, or a bellows-shaped alloy portion.

As the most preferred embodiment of the connection part for a fuel cell in the present application, the inward or outward flange of the flanged tubular alloy portion has a length of 1 mm to 50 mm.

Preferably, the inward or outward flange of the flanged tubular alloy portion has a length of 2 mm to 10 mm.

More preferably, the inward or outward flange of the flanged tubular alloy portion has a length of 4 mm to 5 mm.

As a preferred embodiment of the connection part for a fuel cell in the present application, the inward or outward flange of the flanged tubular alloy portion has a thickness of 1 mm to 5 mm.

Preferably, the inward or outward flange of the flanged tubular alloy portion has a thickness of 0.1 mm to 2 mm.

More preferably, the inward or outward flange of the flanged tubular alloy portion has a thickness of 0.2 mm to 0.4 mm.

The present application also provides a preparation method of the connection part for the fuel cell, including the following steps: bringing the alloy portion into contact with the glass-ceramic portion, and heating the two contacted portions until crystallization occurs in the glass-ceramic portion, and joining the heated glass-ceramic portion and the heated alloy portion to produce the connection part.

In a third aspect, the present application provides a fuel cell system, including a gas delivery pipe made of the connection part described in the second aspect.

As a preferred embodiment of the fuel cell system in the present application, the fuel cell system further includes a manifold and a fuel cell stack.

As a more preferred embodiment of the fuel cell system in the present application, the gas delivery pipe, the manifold, and the fuel cell stack are connected as follows: the gas delivery pipe is connected to one end of the manifold, and the fuel cell stack is connected to another end of the manifold.

Compared with the prior art, the present application has the following beneficial effects: In the present application, a composition and a mass proportion of the main crystalline phase in the glass-ceramic material and a mass percentage of the crystalline phase in the glass-ceramic material are adjusted to prepare a connection part with high-temperature sealing and insulation properties. The connection part exhibits excellent high-temperature mechanical properties, and does not encounter performance degradation or point leakage even after operating under high-temperature working conditions for a long time. The connection part made of the glass-ceramic material in the present application provides a technical support for the commercial application of fuel cell systems.

### BRIEF DESCRIPTION OF THE DRAWING

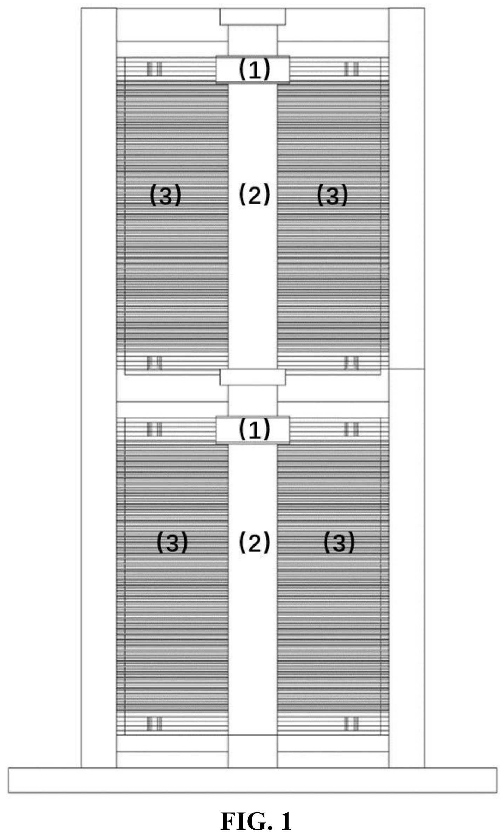

FIG. 1 is a schematic diagram of a stack module of the fuel cell system in the present application,
where (1) represents a glass-ceramic portion, (2) represents an alloy portion, and (3) represents a fuel cell stack.

### DETAILED DESCRIPTION

To well explain the objective, technical solutions, and advantages of the present application, the present application will be further explained below with reference to specific embodiments.

Unless otherwise specified, the reagents, methods, and devices adopted in the present application are all conventional reagents, methods, and devices in the art.

### Examples 1 to 9

Formulas of the glass-ceramic materials for a connection part of a fuel cell in Examples 1 to 9 of the present application are shown in Table 1.

In Examples 1 to 9, a connection part includes an alloy portion and a glass-ceramic portion. The alloy portion is fabricated by heating and sintering an iron-based alloy SUS 444 in a mold. The alloy portion is a flanged tube with an inner diameter of 24 mm, an outer diameter of 32 mm, a flange length of 4 mm, and a flange thickness of 0.4 mm. The glass-ceramic portion is fabricated by heating and sintering a glass-ceramic material listed in Table 1 in a mold. The glass-ceramic portion is a glass tube with an inner diameter of 16 mm and an outer diameter of 32 mm. An end of the glass-ceramic portion is provided with a boss, and the boss has an inner diameter of 16 mm, an outer diameter of 22 mm, and a height of 2 mm.

A preparation method of the connection part comprising the follows steps: The alloy portion and the glass-ceramic portion are brought into contact, and heated in an air atmosphere to a crystallization temperature of the glass-ceramic portion, such that the glass-ceramic portion and the alloy portion are hermetically joined end-to-end to produce the connection part.

**Table 1**

| | Crystalline phase content (wt%) | Main crystalline phase (proportion in glass-ceramic material, wt%) | Akermanite : silicon dioxide (wt ratio) |
|---|---|---|---|
| Example 1 | 85 | Akermanite: 60 | 8 |
| | | Silicon dioxide: 7.5 | |
| Example 2 | 50 | Akermanite: 30 | 3 |
| | | Silicon dioxide: 10 | |
| Example 3 | 60 | Akermanite: 45 | 5.625 |
| | | Silicon dioxide: 8 | |
| Example 4 | 30 | Akermanite: 25 | 5 |
| | | Silicon dioxide: 5 | |
| Example 5 | 50 | Akermanite: 35 | 4.375 |
| | | Silicon dioxide: 8 | |
| Example 6 | 60 | Akermanite: 45 | 5 |
| | | Silicon dioxide: 9 | |
| Example 7 | 30 | Akermanite: 5 | 0.5 |
| | | Silicon dioxide: 10 | |
| Example 8 | 30 | Akermanite: 24 | 8 |
| | | Silicon dioxide: 3 | |
| Example 9 | 90 | Akermanite: 60 | 6 |
| | | Silicon dioxide: 10 | |

### Comparative Examples 1 to 7

In the present application, Comparative Examples 1 to 7 are different from Examples 1 to 9 merely in a formula of a glass-ceramic material for a connection part of a fuel cell. Details are shown in Table 2. Other parameters of Comparative Examples 1 to 7 remain consistent with those of Examples 1 to 9.

**Table 2**

| | Crystalline phase content (wt%) | Main crystalline phase (proportion in glass-ceramic material, wt%) | Akermanite : silicon dioxide (wt ratio) |
|---|---|---|---|
| Comparative Example 1 | 30 | Akermanite: 6 | 0.3 |
| | | Silicon dioxide: 20 | |
| Comparative Example 2 | 90 | Akermanite: 70 | 4.67 |
| | | Silicon dioxide: 15 | |
| Comparative Example 3 | 90 | Akermanite: 80 | 8 |
| | | Silicon dioxide: 10 | |
| Comparative Example 4 | 25 | Akermanite: 10 | 0.67 |
| | | Silicon dioxide: 15 | |
| Comparative Example 5 | 95 | Akermanite: 80 | 13.3 |
| | | Silicon dioxide: 6 | |
| Comparative Example 6 | 25 | Akermanite: 2 | 0.13 |
| | | Silicon dioxide: 15 | |
| Comparative Example 7 | 95 | Akermanite: 3 | 0.06 |
| | | Silicon dioxide: 50 | |

### Examples 10 to 15

In the present application, Examples 10 to 15 are different from Examples 1 to 9 merely in a formula of a glass-ceramic material for a connection part of a fuel cell. Details are shown in Table 3. Other parameters of Examples 10 to 15 remain consistent with those of Examples 1 to 9.

**Table 3**

| | Crystalline phase content (wt%) | Main crystalline phase (proportion in glass-ceramic material, wt%) | Feldspar : silicon dioxide (wt ratio) |
|---|---|---|---|
| Example 10 | 60 | Barium feldspar: 20 | 0.67 |
| | | Silicon dioxide: 30 | |
| Example 11 | 75 | Anorthite: 30 | 1 |
| | | Silicon dioxide: 30 | |
| Example 12 | 95 | Barium feldspar: 60 | 2 |
| | | Silicon dioxide: 30 | |
| Example 13 | 70 | Barium feldspar: 65 | 2.17 |
| | | Silicon dioxide: 30 | |
| Example 14 | 80 | Strontium feldspar: 60 | 5 |
| | | Silicon dioxide: 12 | |
| Example 15 | 80 | Barium feldspar: 50 | 5 |
| | | Silicon dioxide: 10 | |

### Comparative Examples 8 to 14

In the present application, Comparative Examples 8 to 14 are different from Examples 1 to 9 merely in a formula of a glass-ceramic material for a connection part of a fuel cell. Details are shown in Table 4. Other parameters of Comparative Examples 8 to 14 remain consistent with those of Examples 1 to 9.

**Table 4**

| | Crystalline phase content (wt%) | Main crystalline phase (proportion in glass-ceramic material, wt%) | Feldspar : silicon dioxide (wt ratio) |
|---|---|---|---|
| Comparative Example 8 | 60 | Barium feldspar: 12 | 0.3 |
| | | Silicon dioxide: 40 | |
| Comparative Example 9 | 95 | Barium feldspar: 70 | 4.67 |
| | | Silicon dioxide: 15 | |
| Comparative Example 10 | 60 | Barium feldspar: 15 | 0.45 |
| | | Silicon dioxide: 33 | |
| Comparative Example 11 | 25 | Barium feldspar: 10 | 0.67 |
| | | Silicon dioxide: 15 | |
| Comparative Example 12 | 95 | Barium feldspar: 75 | 7.5 |
| | | Silicon dioxide: 10 | |
| Comparative Example 13 | 85 | Barium feldspar: 10 | 0.154 |
| | | Silicon dioxide: 65 | |
| Comparative Example 14 | 85 | Barium feldspar: 70 | 23.3 |
| | | Silicon dioxide: 3 | |

### Examples 16 to 21

In the present application, Examples 16 to 21 are different from Examples 1 to 9 merely in a formula of a glass-ceramic material for a connection part of a fuel cell. Details are shown in Table 5. Other parameters of Examples 16 to 21 remain consistent with those of Examples 1 to 9.

**Table 5**

| | Crystalline phase content (wt%) | Main crystalline phase (proportion in glass-ceramic material, wt%) | Akermanite : forsterite (wt ratio) |
|---|---|---|---|
| Example 16 | 60 | Akermanite: 0 | 0 |
| | | Forsterite: 50 | |
| Example 17 | 60 | Akermanite: 1 | 0.02 |
| | | Forsterite: 50 | |
| Example 18 | 60 | Akermanite: 15 | 0.5 |
| | | Forsterite: 30 | |
| Example 19 | 60 | Akermanite: 20 | 0.8 |
| | | Forsterite: 25 | |
| Example 20 | 95 | Akermanite: 50 | 1.67 |
| | | Forsterite: 30 | |
| Example 21 | 70 | Akermanite: 50 | 10 |
| | | Forsterite: 5 | |

### Comparative Examples 15 to 19

In the present application, Comparative Examples 15 to 19 are different from Examples 1 to 9 merely in a formula of a glass-ceramic material for a connection part of a fuel cell. Details are shown in Table 6. Other parameters of Comparative Examples 15 to 19 remain consistent with those of Examples 1 to 9.

**Table 6**

| | Crystalline phase content (wt%) | Main crystalline phase (proportion in glass-ceramic material, wt%) | Akermanite : forsterite (wt ratio) |
|---|---|---|---|
| Comparative Example 15 | 90 | Akermanite: 75 | 15 |
| | | Forsterite: 5 | |
| Comparative Example 16 | 95 | Akermanite: 15 | 0.2 |
| | | Forsterite: 75 | |
| Comparative Example 17 | 60 | Akermanite: 45 | 15 |
| | | Forsterite: 3 | |
| Comparative Example 18 | 25 | Akermanite: 15 | 1.5 |
| | | Forsterite: 10 | |
| Comparative Example 19 | 95 | Akermanite: 65 | 21.67 |
| | | Forsterite: 3 | |

### Examples 22 to 23

In the present application, Examples 22 to 23 are different from Examples 1 to 9 merely in a formula of a glass-ceramic material for a connection part of a fuel cell. Details are shown in Table 7. Other parameters of Examples 22 to 23 remain consistent with those of Examples 1 to 9.

**Table 7**

| | Crystalline phase content (proportion in glass-ceramic material, wt%) | Main crystalline phase (wt ratio) |
|---|---|---|
| Example 22 | 90 | Lanthanum aluminum borate: 40 |
| | | Lanthanum calcium borate: 40 |
| Example 23 | 60 | Monticellite: 10 |
| | | Clinokurchatovite: 40 |
| | | Cerium dioxide: 10 |

### Effect Example

A gas delivery pipe fabricated of a connection part produced in each of the examples and comparative examples was connected to one end of a fuel cell manifold, and another end of the fuel cell manifold was connected to a fuel cell stack, so as to assemble a fuel cell system. The fuel cell system was subjected to the following performance tests, and test results were shown in Table 8. A schematic diagram of a stack module of the fuel cell system was shown in FIG. 1.
1. Thermal shock resistance test: 20 cycles of temperature rise-heat preservation-temperature fall were performed, where the temperature rise and the temperature fall were conducted at a rate of 5°C/min and the heat preservation was conducted at 800°C for 2 h. The appearance of a product was then observed. An ambient-temperature air leak test was conducted, with a hold pressure of 6,000 Pa. A leakage rate of less than 10 Pa/min was considered acceptable.
2. Aging performance test: The temperature rise and the temperature fall were conducted at a rate of 1°C/min and the heat preservation was conducted at 800°C for 2,000 h. The appearance of a product was then observed. An ambient-temperature air leak test was conducted, with a hold pressure of 6,000 Pa. A leakage rate of less than 10 Pa/min was considered acceptable.
3. Insulation test: A voltage of 1,000 V was applied continuously for at least 15 s. When a voltage value was stable, a measured electric resistivity of more than 1 × 10⁴ Ω·cm was considered acceptable.
4. Mechanical property test: According to the national standard GB/T 4338-2006 "Metallic Materials - Tensile Testing at Elevated Temperatures", the test was conducted under 800°C high-temperature working conditions to determine a maximum tensile force that could be withstood by a test specimen without leakage. A qualified product must withstand at least a tensile force of 40 N and a shear force of 15 N, and experienced no leakage.

**Table 8**

| | Thermal shock resistance test: Leakage rate (Pa/min) | Aging performance test: Leakage rate (Pa/min) | Electric resistivity (Ω·cm) | Mechanical property test (N) |
|---|---|---|---|---|
| Example 1 | 0 | 0 | >1×10⁴ | Tensile force: 1,000 |
| | | | | Shear force: 100 No leakage |
| Example 2 | 0 | 0 | >1×10⁴ | Tensile force: 400 |
| | | | | Shear force: 60 No leakage |
| Example 3 | 0 | 0 | >1×10⁴ | Tensile force: 800 |
| | | | | Shear force: 80 No leakage |
| Example 4 | 0 | 0 | >1×10⁴ | Tensile force: 50 |
| | | | | Shear force: 30 No leakage |
| Example 5 | 0 | 0 | >1×10⁴ | Tensile force: 400 |
| | | | | Shear force: 60 No leakage |
| Example 6 | 0 | 0 | >1×10⁴ | Tensile force: 800 |
| | | | | Shear force: 80 No leakage |
| Example 7 | 0 | 0 | >1×10⁴ | Tensile force: 50 |
| | | | | Shear force: 30 No leakage |
| Example 8 | 0 | 0 | >1×10⁴ | Tensile force: 50 |
| | | | | Shear force: 30 No leakage |
| Example 9 | 0 | 0 | >1×10⁴ | Tensile force: 1,000 |
| | | | | Shear force: 100 No leakage |
| Example 10 | 0 | 0 | >1×10⁴ | Tensile force: 800 |
| | | | | Shear force: 80 No leakage |
| Example 11 | 0 | 0 | >1×10⁴ | Tensile force: 800 |
| | | | | Shear force: 80 No leakage |
| Example 12 | 0 | 0 | >1×10⁴ | Tensile force: 1,000 |
| | | | | Shear force: 100 No leakage |
| Example 13 | 0 | 0 | >1×10⁴ | Tensile force: 800 |
| | | | | Shear force: 80 No leakage |
| Example 14 | 0 | 0 | >1×10⁴ | Tensile force: 45 |
| | | | | Shear force: 15 No leakage |
| Example 15 | 0 | 0 | >1×10⁴ | Tensile force: 800 |
| | | | | Shear force: 80 No leakage |
| Example 16 | 0 | 0 | >1×10⁴ | Tensile force: 800 |
| | | | | Shear force: 80 No leakage |
| Example 17 | 0 | 0 | >1×10⁴ | Tensile force: 800 |
| | | | | Shear force: 80 No leakage |
| Example 18 | 0 | 0 | >1×10⁴ | Tensile force: 800 |
| | | | | Shear force: 80 No leakage |
| Example 19 | 0 | 0 | >1×10⁴ | Tensile force: 800 |
| | | | | Shear force: 80 No leakage |
| Example 20 | 0 | 0 | >1×10⁴ | Tensile force: 1,000 |
| | | | | Shear force: 100 No leakage |
| Example 21 | 0 | 0 | >1×10⁴ | Tensile force: 800 |
| | | | | Shear force: 80 No leakage |
| Example 22 | 0 | 0 | >1×10⁴ | Tensile force: 400 |
| | | | | Shear force: 60 No leakage |
| Example 23 | 0 | 0 | >1×10⁴ | Tensile force: 400 |
| | | | | Shear force: 60 No leakage |
| Comparative Example 1 | 0 | 0 | >1×10⁴ | Tensile force: 50 |
| | | | | Shear force: 30 No leakage |
| Comparative Example 2 | 0 | 0 | >1×10⁴ | Tensile force: 45 |
| | | | | Shear force: 15 No leakage |
| Comparative Example 3 | 0 | 0 | >1×10⁴ | Tensile force: 50 |
| | | | | Shear force: 15 No leakage |
| Comparative Example 4 | 6000 | 6000 | >1×10⁴ | Tensile force: 0 |
| | | | | Shear force: 0 Leakage |
| Comparative Example 5 | 6000 | 6000 | >1×10⁴ | Tensile force: 30 |
| | | | | Shear force: 15 No leakage |
| Comparative Example 6 | 6000 | 6000 | >1×10⁴ | Tensile force: 0 |
| | | | | Shear force: 0 Leakage |
| Comparative Example 7 | 6000 | 6000 | >1×10⁴ | Tensile force: 30 |
| | | | | Shear force: 15 No leakage |
| Comparative Example 8 | 0 | 0 | >1×10⁴ | Tensile force: 45 |
| | | | | Shear force: 15 No leakage |
| Comparative Example 9 | 0 | 0 | >1×10⁴ | Tensile force: 50 |
| | | | | Shear force: 15 No leakage |
| Comparative Example 10 | 0 | 0 | >1×10⁴ | Tensile force: 45 |
| | | | | Shear force: 15 No leakage |
| Comparative Example 11 | 6000 | 6000 | >1×10⁴ | Tensile force: 0 |
| | | | | Shear force: 0 Leakage |
| Comparative Example 12 | 6000 | 6000 | >1×10⁴ | Tensile force: 30 |
| | | | | Shear force: 15 No leakage |
| Comparative Example 13 | 6000 | 6000 | >1×10⁴ | Tensile force: 0 |
| | | | | Shear force: 0 Leakage |
| Comparative Example 14 | 6000 | 6000 | >1×10⁴ | Tensile force: 30 |
| | | | | Shear force: 15 No leakage |
| Comparative Example 15 | 0 | 0 | >1×10⁴ | Tensile force: 50 |
| | | | | Shear force: 15 No leakage |
| Comparative Example 16 | 0 | 0 | >1×10⁴ | Tensile force: 50 |
| | | | | Shear force: 15 No leakage |
| Comparative Example 17 | 0 | 0 | >1×10⁴ | Tensile force: 45 |
| | | | | Shear force: 15 No leakage |
| Comparative Example 18 | 6000 | 6000 | >1×10⁴ | Tensile force: 0 |
| | | | | Shear force: 0 Leakage |
| Comparative Example 19 | 6000 | 6000 | >1×10⁴ | Tensile force: 30 |
| | | | | Shear force: 15 No leakage |

According to the data in Table 8, the connection parts made of the glass-ceramic materials in Examples 1 to 23 of the present application can withstand at least a tensile force of 40 N or more and a shear force of 15 N or more under 800°C high-temperature working conditions, and demonstrate excellent high-temperature mechanical properties. These connection parts experience no leakage in both thermal shock resistance and aging performance tests, indicating superior thermal shock resistance and high-temperature reliability. Additionally, these connection parts can withstand the continuous application of a voltage of 1,000 V for at least 15 s with a stable voltage value, and enables an electric resistivity of greater than 1 × 10⁴ Ω·cm, indicating excellent high-temperature voltage endurance and insulation performance. Comparative Example 1 exhibits inferior high-temperature mechanical properties to Examples 1 to 6 because the mass percentage of silicon dioxide in the main crystalline phase is not within the range provided in the present application. Comparative Examples 2 to 7 also show poor high-temperature mechanical properties because mass percentages or a mass ratio of akermanite and silicon dioxide in the main crystalline phase is not within the range specified in the present disclosure and/or the mass percentage of the crystalline phase in the glass-ceramic material is too low. Comparative Examples 4 to 7 also demonstrate poor thermal shock resistance and high-temperature reliability. Similarly, Comparative Examples 8 to 14 also show poor high-temperature mechanical properties because mass percentages or a mass ratio of feldspar and silicon dioxide in the main crystalline phase is not within the range specified in the present disclosure and/or the mass percentage of the crystalline phase in the glass-ceramic material is too low. Comparative Examples 11 to 14 also exhibit poor thermal shock resistance and high-temperature reliability. Comparative Examples 15 to 19 also demonstrate poor high-temperature mechanical properties because mass percentages or a mass ratio of akermanite and forsterite in the main crystalline phase is not within the range specified in the present disclosure and/or the mass percentage of the crystalline phase in the glass-ceramic material is too low. Comparative Examples 18 and 19 also demonstrate inferior thermal shock resistance and high-temperature reliability.

Finally, it should be noted that the above examples are provided merely to describe the technical solutions of the present application, rather than to limit the protection scope of the present application. Although the present application is described in detail with reference to preferred examples, a person of ordinary skill in the art should understand that modifications or equivalent replacements may be made to the technical solutions of the present application without departing from the spirit and scope of the technical solutions of the present application.

## Claims

1. A glass-ceramic material for a connection part of a fuel cell, wherein the glass-ceramic material comprises a crystalline phase and a glass phase; a mass percentage of the crystalline phase in the glass-ceramic material is higher than or equal to 30%; and a main crystalline phase of the crystalline phase comprises at least one selected from the group consisting of akermanite, feldspar, olivine, clinokurchatovite, silicon dioxide, cerium dioxide, lanthanum aluminum borate, and lanthanum calcium borate.

2. The glass-ceramic material for a connection part of a fuel cell according to claim 1, wherein the mass percentage of the crystalline phase in the glass-ceramic material is higher than or equal to 60%.

3. The glass-ceramic material for a connection part of a fuel cell according to claim 1, wherein the mass percentage of the crystalline phase in the glass-ceramic material is higher than or equal to 85%.

4. The glass-ceramic material for a connection part of a fuel cell according to claim 1, wherein the main crystalline phase of the crystalline phase comprises akermanite and silicon dioxide, and a mass ratio of the akermanite to the silicon dioxide is (0.3-8):1.

5. The glass-ceramic material for a connection part of a fuel cell according to claim 4, wherein based on a total mass of the glass-ceramic material, the glass-ceramic material comprises 5% to 60% by mass of akermanite and 3% to 10% by mass of silicon dioxide.

6. The glass-ceramic material for a connection part of a fuel cell according to claim 1, wherein the main crystalline phase of the crystalline phase comprises feldspar and silicon dioxide, and a mass ratio of the feldspar to the silicon dioxide is (0.3-5):1.

7. The glass-ceramic material for a connection part of a fuel cell according to claim 6, wherein based on a total mass of the glass-ceramic material, the glass-ceramic material comprises 20% to 65% by mass of feldspar and 10% to 30% by mass of silicon dioxide.

8. The glass-ceramic material for a connection part of a fuel cell according to claim 1, wherein the main crystalline phase of the crystalline phase comprises akermanite and olivine, and a mass ratio of the akermanite to the olivine is (0-15):1.

9. The glass-ceramic material for a connection part of a fuel cell according to claim 8, wherein based on a total mass of the glass-ceramic material, the glass-ceramic material comprises 0% to 50% by mass of akermanite and 5% to 50% by mass of olivine.

10. A connection part for a fuel cell, comprising a glass-ceramic portion made of the glass-ceramic material according to any one of claims 1-9, and an alloy portion, preferably, the glass-ceramic portion and the alloy portion in the connection part are hermetically joined end-to-end.
